(19) Europäisches Patentamt

European Patent Office

Office européen des brevets

(11) Numéro de publication : **0 363 287 B1**

(12) **FASCICULE DE BREVET EUROPEEN**

(45) Date de publication du fascicule du brevet :
08.07.92 Bulletin 92/28

(51) Int. Cl.⁵ : **B65G 47/51**

(21) Numéro de dépôt : **89420356.1**

(22) Date de dépôt : **21.09.89**

(54) **Ligne de production à stock tampon dynamique.**

(30) Priorité : **04.10.88 FR 8813306**

(43) Date de publication de la demande :
**11.04.90 Bulletin 90/15**

(45) Mention de la délivrance du brevet :
**08.07.92 Bulletin 92/28**

(84) Etats contractants désignés :
**BE CH DE ES GB IT LI**

(56) Documents cités :
**DE-A- 3 538 860**
**FR-A- 2 204 551**
**US-A- 4 227 607**

(73) Titulaire : **MERLIN GERIN**
**2, chemin des Sources**
**F-38240 Meylan (FR)**

(72) Inventeur : **Terracol, Claude**
**MERLIN GERIN Sce. Brevets**
**F-38050 Grenoble Cédex (FR)**

(74) Mandataire : **Kern, Paul et al**
**Merlin Gerin Sce. Brevets 20, rue Henri Tarze**
**F-38050 Grenoble Cédex (FR)**

Jouve, 18, rue Saint-Denis, 75001 PARIS

**Description**

L'invention est relative à une ligne de production composée de machines ou de postes de travail, et de convoyeurs reliant chacun deux machines successives pour transporter les pièces de la première machine à la deuxième machine en permettant une accumulation des pièces pour constituer un stock tampon palliant les différences temporaires de débit de production desdites deux machines, un premier détecteur d'accumulation de pièces étant disposé à la sortie de la première machine pour arrêter cette dernière et le convoyeur en cas d'accumulation excessive de pièces sur le convoyeur.

Une ligne de production du genre mentionné autorise l'arrêt temporaire d'une machine sans entraîner automatiquement l'arrêt de toute la ligne de production. Les machines disposées en amont de la machine défaillante poursuivent la production en accroissant le stock tampon en amont de la machine défaillante, tandis que les machines en aval peuvent fonctionner en étant alimentées par le stock tampon en aval de la machine défaillante. L'autonomie de fonctionnement de chaque machine dépend bien entendu de l'importance des stocks tampons, entre lesquels elle est située, en l'occurrence de la longueur des convoyeurs en amont et en aval de la machine, sur lesquels les pièces peuvent s'accumuler. En fonctionnement normal, la longueur de transport entre deux machines ne modifie pas le débit de production de la ligne, tant que le stock tampon n'est jamais complètement vide. La longueur de transport influence par contre notablement le débit de production lors d'un arrêt de la machine amont, et d'un épuisement du stock tampon. Dans ce cas, au redémarrage de la machine amont, les pièces doivent d'abord parcourir toute la longueur du convoyeur avant que la machine en aval soit réalimentée. Le démarrage ou la production de cette machine aval est donc différé d'un temps correspondant au temps de parcours de la pièce, de la machine amont vers la machine aval. Il a déjà été proposé de réduire ce temps d'immobilisation de la machine aval en augmentant la vitesse de transport, mais une telle augmentation est généralement limitée par les risques de détérioration des pièces transportées, lors des chocs occasionnés par les phases d'accumulation. Le gain de production dû au stock tampon est ainsi en partie annulé par le temps important d'acheminement d'une pièce, d'une machine vers l'autre.

La présente invention a pour but de permettre la réalisation d'une ligne de production à stock tampon, dont le débit de production est amélioré par une minimisation de l'influence du temps de transport.

La ligne de production selon l'invention est caractérisée en ce que ledit convoyeur comprend :

– deux tronçons, un tronçon amont disposé à la sortie de ladite première machine, suivi d'un tronçon aval disposé à l'entrée de la deuxième machine

– un moyen d'entraînement dudit tronçon amont sélectivement à grande vitesse "V1" et à petite vitesse "V2", cette dernière étant compatible avec un choc sans risque de détérioration des pièces transportées

– et un deuxième détecteur d'accumulation de pièces, disposé sur le tronçon aval pour piloter ledit moyen d'entraînement pour un fonctionnement à petite vitesse "V2" du tronçon amont lors d'une accumulation de pièces jusqu'au niveau dudit deuxième détecteur.

Le tronçon amont du convoyeur est généralement d'une grande longueur, notablement supérieure à celle du tronçon aval, et les pièces peuvent ainsi être transportées à grande vitesse sur la plus grande longueur du parcours de séparation des deux machines. Cette grande vitesse de transport est acceptable uniquement en l'absence de tout risque de chocs, c'est à dire en l'absence d'accumulation de pièces ou de palettes de support de pièces. Le fonctionnement à grande vitesse du tronçon amont n'intervient que lorsque le deuxième détecteur ne détecte aucune accumulation de pièces, et que de ce fait la circulation sur le tronçon amont est absolument libre. Dès qu'une accumulation de pièces est signalée par le deuxième détecteur, et qu'il existe un risque de propagation de l'accumulation sur le tronçon amont, c'est à dire un risque de tamponnement des pièces transportées à grande vitesse contre les pièces accumulées à l'arrêt, le deuxième détecteur impose un fonctionnement à petite vitesse du tronçon amont. Cette petite vitesse doit être compatible avec les risques de chocs sans provoquer de détérioration des pièces. Cette petite vitesse est avantageusement égale à celle du tronçon aval du convoyeur. Les pièces transportées à petite vitesse sur le tronçon aval viennent s'arrêter en butant contre la dernière pièce du stock, mais le choc est insuffisant pour détériorer la pièce.

Le passage de la grande vitesse à la petite vitesse de transport sur le tronçon amont et le retour à la grande vitesse peuvent être commandés respectivement par la détection d'une accumulation par le deuxième détecteur, et par la disparition de cette accumulation. Un effet de pompage risque de se produire et selon un perfectionnement de l'invention, le tronçon aval est équipé d'un troisième détecteur d'accumulation, disposé au voisinage de la sortie du tronçon aval. Dans ce mode de réalisation, le troisième détecteur pilote le passage de la petite vitesse à la grande vitesse, tandis que le deuxième détecteur, avantageusement disposé à l'entrée du tronçon aval, pilote le passage de la grande vitesse à la petite vitesse.

Le pilotage du système est de préférence réalisé au moyen d'un système d'automatisme, par exemple celui qui contrôle le fonctionnement de la machine aval. Ce système d'automatisme peut être un automate programmable ou tout autre système équivalent. Le pilotage consiste à partir d'indications fournies par les capteurs, à commander la vitesse du tronçon amont, en l'occurrence à arrêter ce tronçon de convoyeur, ou à l'entraîner à petite vitesse ou à grande vitesse. Le système d'automatisme commande également l'arrêt du tronçon aval s'il y a accumulation sur celui-ci, simultanément à un arrêt de la machine aval. Le même système peut commander l'arrêt de la première machine lorsque le niveau de stock atteint le premier capteur ou détecteur placé à l'entrée du tronçon amont. Un arrêt simultané du convoyeur évite le glissement des pièces accumulées sur le convoyeur en mouvement, de façon à limiter l'usure et la consommation d'énergie.

Les détecteurs ou capteurs sont d'un type connu en soi, par exemple, un détecteur optique ou un détecteur de proximité, capable de détecter le passage d'une pièce posée sur le transporteur, ou d'une palette supportant la pièce. A chaque détecteur est associée une temporisation permettant de faire la distinction entre un fonctionnement normal et un fonctionnement en accumulation. Lors d'un fonctionnement normal, l'excitation du détecteur de passage n'excède jamais la valeur de la temporisation qui est légèrement supérieure au temps de passage d'une pièce devant le détecteur. Celà signifie que les pièces successives sont espacées les unes des autres, et qu'elles ne sont pas accumulées en stock. Le fonctionnement en accumulation correspond à une excitation du détecteur pendant une durée dépassant la temporisation ou d'une manière ininterrompue. Cette excitation signifie que les pièces sont en accumulation les unes contre les autres. L'état d'accumulation ne signifie donc pas obligatoirement une immobilisation des pièces, mais également un aboutement des pièces les unes contre les autres, avec éventuellement un déplacement à faible vitesse.

Une amélioration complémentaire, principalement valable pour les stocks de grande capacité, peut être obtenue en prévoyant un nombre de tronçons de convoyeurs en série supérieur à deux. Le convoyeur aval étant inchangé, le convoyeur amont sera lui-même subdivisé, par exemple en deux tronçons de même importance que nous désignerons par convoyeur amont et convoyeur central. Dans cette configuration, le convoyeur central, lui-même équipé de son capteur de détection d'accumulation, joue vis à vis du convoyeur amont le même rôle que le convoyeur aval vis à vis du convoyeur central. On peut ainsi maintenir le convoyeur amont à grande vitesse, tant que le phénomène d'accumulation ne dépasse pas le capteur du convoyeur central, ce qui se traduit, dans ce type de situation, par une accélération du transport.

Les stocks tampons impliquent de grandes longueurs des convoyeurs et une emprise au sol généralement excessive. Selon un mode de mise en oeuvre préférentiel de l'invention, le stock principal essentiellement constitué par le tronçon amont du convoyeur, est réalisé sous forme de deux structures pseudo-hélicoïdales, une montante issue de la première machine et une descendante permettant de revenir au niveau de la deuxième machine (ou l'inverse). Le convoyeur peut être du type à écailles qui se prête particulièrement bien à cette géométrie, et qui permet une accumulation des pièces ou palettes transportées tout en restant en mouvement.

D'autres avantages ressortiront plus clairement de la description qui va suivre d'un mode de mise en oeuvre de l'invention donné à titre d'exemple non limitatif et représenté aux dessins annexés dans lesquels:

– la figure 1 est une vue schématique en élévation d'un dispositif de stockage tampon placé entre deux machines;

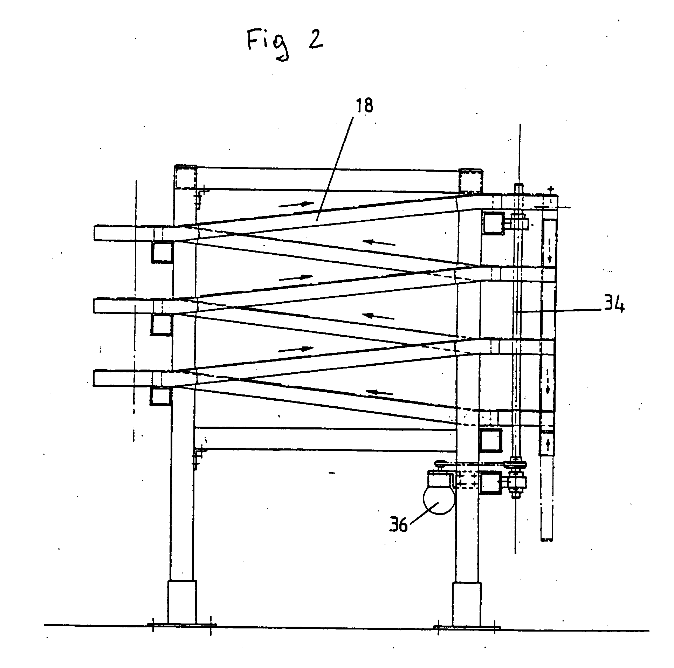

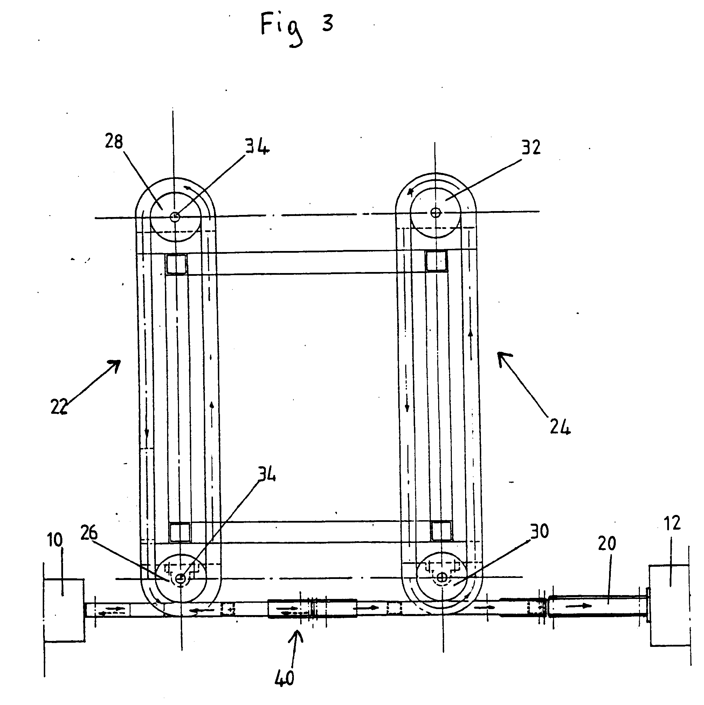

– les figures 2 et 3 sont des vues respectivement de côté et de dessus du dispositif selon la figure 1;
– les figures 4 à 7 illustrent schématiquement le mode de fonctionnement de la ligne de production selon les figures 1 à 3.

Sur les figures, une première machine ou un poste de travail 10 est relié à une deuxième machine 12 par un convoyeur désigné dans son ensemble par le repère 14. Le convoyeur 14 peut être un convoyeur à écailles ou tout autre transporteur approprié et il entraîne par friction, les pièces 16 ou les palettes de support des pièces 16 posées sur le convoyeur. La vitesse du convoyeur 14 est suffisante pour une prise en charge de ces pièces 16, compte tenu de leur longueur ou de la longueur de la palette de support. Les pièces 16 sont espacées sur le convoyeur 14, l'écartement entre deux pièces successives étant déterminé par la vitesse du convoyeur au moment de la prise en charge de la pièce 16 à la sortie de la première machine 10. Le convoyeur 14 comporte deux tronçons, un tronçon amont 18 disposé à la sortie de la première machine 10, et un tronçon aval 20 succédant au tronçon amont 18 et alimentant la deuxième machine 12. Le tronçon amont 18 est en deux parties, l'une 22 ascendante et l'une 24 descendante, chacune constituée par une piste pseudo-hélicoïdale s'étendant verticalement pour allonger le parcours et les possibilités de stockage des pièces 16 sur le convoyeur 14. La bande formée par les écailles du convoyeur 14 passe sur des poulies d'extrémités 26,28;30,32 échelonnées sur des axes verticaux 34, l'un de ces axes de chaque partie 22,24 étant entraîné par un moteur 36,38. Les pièces 16 sortant de la machine 10 sont prises en charge à la base de la partie montante 22 pour se déplacer en hélice vers le haut, et être transférées par une partie transversale 40 à la partie descendante 24, et à la base de l'hélice descendante, être transférées au tronçon aval 20, alimentant la deuxième machine 12. Cette structure en double hélice verticale permet d'introduire une longueur développée de stockage importante entre les deux machines 10,12 relativement proche l'une de l'autre. Elle permet de ménager un passage en pont entre les machines 10 et 12 utile à la circulation du personnel. Les parties montante 22 et descendante 24 sont des bandes indépendantes ayant leur propre moteur 36,38 d'entraînement, ce qui permet éventuellement de subdiviser le tronçon amont 18 en deux parties entraînées à des vitesses différentes de la manière décrite ci-après. Le tronçon amont 18 peut également être un convoyeur unique, auquel cas l'entraînement peut être réalisé par un moteur unique ou par un accouplement des moteurs 36,38 imposant un entraînement synchrone. Dans ce cas, la bande à écailles peut être la même dans la partie montante et dans la partie descendante, d'autres agencements étant d'ailleurs concevables. Le tronçon aval 20 est entraîné par un autre moteur 42 et l'ensemble est piloté par un système de commande (non représenté), par exemple un automate programmable qui commande également le fonctionnement des machines 10,12, ou de l'une d'elles.

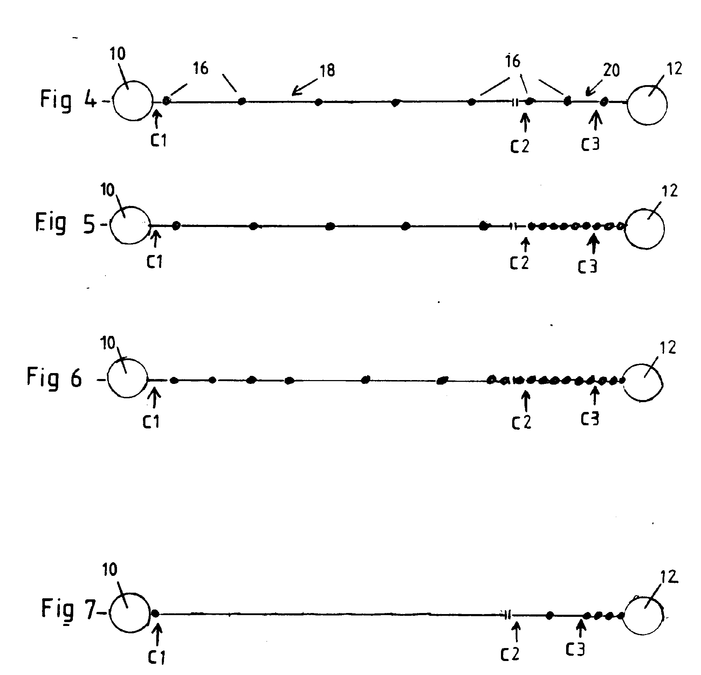

La commande du moteur 42 d'entraînement du convoyeur aval 20, consiste à arrêter ou à mettre en marche ce convoyeur 20, la vitesse de fonctionnement étant unique et, à faible vitesse "V2" suffisante pour alimenter en continu la deuxième machine 12. Le convoyeur amont 18 peut fonctionner à deux vitesses, une grande vitesse "V1", et une petite vitesse "V2" qui peut être égale ou voisine à celle du convoyeur aval 20. La petite vitesse "V2" doit être inférieure à la vitesse risquant de provoquer une détérioration des pièces en cas de chocs contre un obstacle fixe. Cette situation peut se présenter, lors d'un arrêt de la deuxième machine 12 et un début d'accumulation des pièces à l'arrêt sur le convoyeur aval 20. Les pièces entrant sur ce convoyeur et circulant à la petite vitesse "V2" viennent buter contre la pièce précédente à l'arrêt, et il est clair que ce choc ne doit pas être trop important afin d'éviter une détérioration. La grande vitesse "V1" est choisie en fonction des performances intrinsèques du convoyeur. La grande vitesse "V1" est par exemple voisine du double de la petite vitesse "V2". Le système d'automatisme pilote le fonctionnement de la ligne de production à partir d'indications fournies par les détecteurs ou capteurs C1, C2 et C3, respectivement disposés, à l'entrée du convoyeur amont 18, à l'entrée du convoyeur aval 20, et à la sortie de ce dernier convoyeur. Ce fonctionnement est décrit ci-après plus particulièrement en référence aux figures 4 à 8.

En fonctionnement normal représenté à la figure 4, la cadence de production des deux machines 10,12 est identique et le convoyeur amont 18 fonctionne à grande vitesse "V1", tandis que le convoyeur aval 20 est à petite vitesse. Une pièce 16 sortant de la première machine 10 est prise en charge par le convoyeur amont 18 et se déplace à grande vitesse "V1" jusqu'au passage sur le convoyeur aval 20, où elle ralentit brusquement pour avancer à petite vitesse "V2" jusqu'à la prise en charge par la deuxième machine 12. Les pièces 16 sont espacées le long du convoyeur aval 20 lorsque la vitesse de ce convoyeur est suffisante par rapport à la cadence de la deuxième machine 12. L'espacement des pièces 16 sur le convoyeur amont 18 est bien entendu supérieur à celui sur le convoyeur aval 20, cet espacement étant sensiblement le double lorsque le rapport des vitesses est de 1 à 2.

Lors d'une cadence de production de la deuxième machine 12 inférieure à celle de la première machine 10, par exemple due à une panne, les pièces 16 arrivent trop vite et elles s'accumulent en amont de la deuxième machine 12 sur le convoyeur aval 20, de la manière représentée sur la figure 5. Les pièces arrivant, butent contre la dernière pièce du stock accumulé, mais ces pièces entraînées à faible vitesse "V2" ne subissent aucune détérioration due au choc. Lors d'une persistance de la panne de la deuxième machine 12, le stock de pièces atteint le deuxième détecteur "C2" qui est agencé pour commander par l'intermédiaire du système d'automatisme, un changement de vitesse du convoyeur amont 18 qui passe de la grande vitesse "V1" à la petite vitesse "V2" d'entraînement. Si la deuxième machine 12 est à l'arrêt, le système d'automatisme peut commander simultanément l'arrêt du convoyeur aval 20 pour éviter un glissement permanent des pièces accumulées sur ce convoyeur. Les pièces continuent à s'accumuler, cette accumulation se propageant sur le convoyeur amont 18 qui fonctionne à petite vitesse. Dès le passage du convoyeur amont 18 de la grande vitesse "V1" à la petite vitesse "V2", l'écartement des pièces chargées diminue et une partie du convoyeur amont 18 est chargé à forte densité, tandis qu'une partie intermédiaire peut rester chargée a faible densité, de la manière représentée à la figure 6. L'ensemble du convoyeur amont 18 peut être chargé à faible vitesse "V2" si l'arrêt de la deuxième machine 12 est suffisamment long. L'accumulation des pièces 16 sur le convoyeur amont 18 s'effectue sans choc néfaste, la vitesse de ce convoyeur étant réduite.

Si le niveau du stock atteint le premier détecteur C1, celui-ci commande l'arrêt de la première machine 10 et éventuellement du convoyeur amont 18.

Lorsque la deuxième machine 12 redémarre, le contenu du stock redevient constant. Si la machine 10 s'arrête à son tour, la zone d'accumulation diminue et le niveau du stock régresse. Si ce niveau atteint le troisième détecteur C3, celui-ci commande le passage à la grande vitesse "V1" du convoyeur amont 18 (figure 7). Le redémarrage de la deuxième machine 12 aura bien entendu provoqué la remise en route à petite vitesse "V2" du convoyeur aval 20. Quand la machine 10 redémarre, les pièces produites sont acheminées par le convoyeur 18 à grande vitesse jusqu'au convoyeur 20. La disproportion de longueur entre ces deux convoyeurs permet de maintenir le temps de transport, donc le retard à l'alimentation de la machine 12, au voisinage du minimum possible. Quand la première pièce produite par la machine 10 après son redémarrage atteint la machine 12, on se retrouve dans les conditions initiales, illustrées par la figure 4.

Le dispositif technologique selon l'invention est relativement simple et il permet d'accélérer au maximum le transit des pièces entre les deux machines 10,12, sans pour autant générer de chocs à grande vitesse entre les pièces susceptibles de les détériorer.

Dans un but de simplification, on peut remplacer les détecteurs C2 et C3 par un détecteur unique, C2 placé dans une position moyenne sur le convoyeur aval 20 et assurant à lui seul les fonctions de pilotage décrites ci-dessus. Lorsque le détecteur C2 détecte une accumulation de pièces 16, il commande le passage à petite vitesse du convoyeur amont 18. Par contre, si le détecteur C2 ne détecte pas d'accumulation, il commande un fonctionnement à grande vitesse "V1" du convoyeur amont 18. Le phénomène de pompage peut être accentué, mais dans certains cas il reste acceptable.

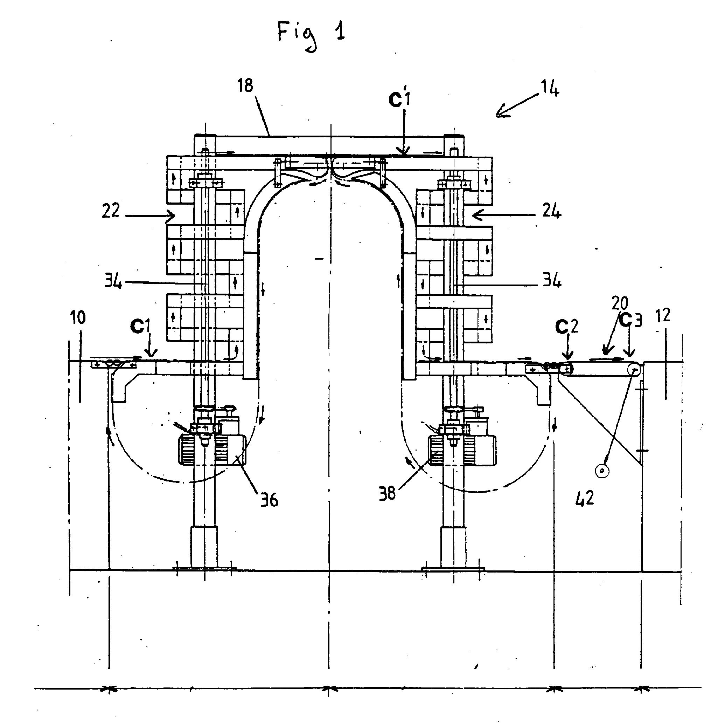

Une autre amélioration peut être apportée en subdivisant, selon un développement de l'invention, le convoyeur amont 18 en deux parties 22,24 qui peuvent être égales ou de longueurs différentes. Chacune des parties 22,24 dispose de son propre moteur d'entraînement 36,38, et d'un détecteur C1 disposé au voisinage de l'entrée de la partie 22,24. Ce perfectionnement permet une augmentation de la production dans le cas particulier d'un arrêt de la première machine 10 pendant une durée suffisamment courte, ne permettant pas l'épuisement du stock. Lors du redémarrage de la première machine 10, le niveau du stock n'a, par exemple, pas atteint le troisième détecteur C3 commandant le fonctionnement à grande vitesse du convoyeur amont 18. Par contre le niveau du stock est insuffisant pour alimenter la deuxième machine 12, jusqu'à l'arrivée de la première pièce produite par la première machine 10, et transportée à faible vitesse "V2" par le convoyeur amont 18. En subdivisant le convoyeur amont 18 en deux parties, la partie en amont 22 fonctionnera à grande vitesse "V1" et accélèrera le déplacement de la première pièce sortant de la première machine 10. Le dispositif illustré par la figure 1 peut fonctionner de cette manière en désaccouplant les moteurs d'entraînement 36,38 et en prévoyant un capteur C1 au voisinage de l'entrée de la partie aval 24 du convoyeur amont 18. Les parties 22,24 peuvent avoir les mêmes petites vitesses "V2" et grandes vitesses "V1", mais il est également possible de concevoir des vitesses différentes.

L'invention est bien nullement limitée au dispositif plus particulièrement décrit et représenté aux figures annexées.

## Revendications

1. Ligne de production composée de machines (10,12) ou de postes de travail et de convoyeurs (18,20) reliant chacun deux machines successives pour transporter les pièces (16) de la première machine (10) à la deuxième machine (12) en permettant une accumulation des pièces pour constituer un stock tampon palliant les différences temporaires de débit de production desdites deux machines, un premier détecteur (C1) d'accumulation de pièces étant disposé à la sortie de la première machine (10) pour arrêter cette dernière et le convoyeur en cas d'accumulation excessive de pièces sur le convoyeur, caractérisée en ce que ledit convoyeur comprend:

   – deux tronçons, un tronçon amont (18) disposé à la sortie de ladite première machine (10), suivi d'un tronçon aval disposé à l'entrée de la deuxième machine (12),
   – un moyen d'entraînement (36,38) dudit tronçon amont (18) sélectivement à grande vitesse (V1) et à petite vitesse (V2), cette dernière étant compatible avec un choc sans risque de détérioration des pièces (16) transportées,
   – et un deuxième détecteur (C2) d'accumulation de pièces, disposé sur le tronçon aval (20) pour piloter ledit moyen d'entraînement pour un fonctionnement à petite vitesse (V2) du tronçon amont (18) lors d'une accumulation de pièces jusqu'au niveau dudit deuxième détecteur.

2. Ligne de production selon la revendication 1, caractérisée en ce que la vitesse d'entraînement du tronçon aval (20) est sensiblement égale à ladite petite vitesse (V2).

3. Ligne de production selon la revendication 1 ou 2, caractérisée en ce que ledit deuxième détecteur (C2) commande l'entraînement à grande vitesse (V1) lorsqu'il ne détecte pas d'accumulation de pièces (16).

4. Ligne de production selon la revendication 1 ou 2, caractérisée en ce qu'un troisième détecteur (C3) d'accumulation est diposé sensiblement à la sortie du tronçon aval (20), le deuxième détecteur (C2) étant sensiblement à l'entrée du tronçon aval (20) et que ledit troisième détecteur (C3) pilote ledit moyen d'entraînement (36,38) pour le passage de la petite vitesse (V2) à la grande vitesse (V1) lorsque l'accumulation de pièces n'atteint plus le niveau dudit troisième détecteur.

5. Ligne de production selon l'une quelconque des revendications précédentes, caractérisée en ce que la longueur du tronçon amont (18) est sensiblement plus grande que celle du tronçon aval (20).

6. Ligne de production selon l'une quelconque des revendications précédentes, caractérisée en ce qu'elle comporte un dispositif d'arrêt du tronçon aval (20) lorsque le deuxième détecteur (C2) détecte une accumulation de pièces et que la deuxième machine est à l'arrêt.

7. Ligne de production selon l'une quelconque des revendications précédentes, caractérisée en ce que le tronçon amont 18 est lui même subdivisé en plusieurs tronçons successifs, chacun d'eux pouvant être sélectivement et indépendamment entraînés à grande (V1) et à petite (V2) vitesse, en étant pilotés par un détecteur associé au tronçon suivant.

8. Ligne de production selon l'une quelconque des revendications précédentes, caractérisée en ce que lesdits détecteurs (C1,C2,C3) détectent le passage des pièces et sont associés à un temporisateur pour émettre un signal en phase d'accumulation de pièces (16).

9. Ligne de production selon l'une quelconque des revendications précédentes, caractérisée en ce que les cadences desdites deux machines (10,12) sont sensiblement égales et que ladite petite vitesse (V2) du convoyeur assure une cadence d'alimentation supérieure à ladite cadence des machines.

10. Ligne de production selon l'une quelconque des revendications précédentes, caractérisée en ce que le convoyeur entraîne par friction les pièces (16) ou les palettes support des pièces en autorisant une formation du stock tampon par accumulation de pièces avec glissement entre le convoyeur et les pièces.

11. Ligne de production selon l'une quelconque des revendications précédentes, caractérisée en ce que le convoyeur (18) comporte deux structures pseudo-hélicoïdales permettant, par un décalage vertical d'obtenir la longueur développée nécessaire tout en limitant la surface au sol nécessaire.

12. Ligne selon la revendication 11, caractérisée en ce que le décalage vertical est exploité pour ménager entre les deux machines un passage en pont facilitant la circulation du personnel et des produits.

**Patentansprüche**

1. Fertigungslinie mit mehreren Bearbeitungsmaschinen (10, 12) bzw. -stationen und jeweils zwei aufeinanderfolgende Maschinen verbindenden Fördermitteln (18, 20) zum Transport der Produkte (16) von der ersten Maschine (10) zur zweiten Maschine (12), wobei durch Produktanhäufung eine Pufferstrecke zum Ausgleich unterschiedlicher Durchsätze der genannten Maschinen gebildet werden kann und am Ausgang der ersten Maschine (10) ein erster Fühler (C1) zur Erfassung der Produktanhäufung angebracht ist, der die genannte Maschine sowie das Fördermittel bei übermäßiger Produktanhäufung auf dem Fördermittel anhält, dadurch gekennzeichnet, daß das genannte Fördermittel aus folgenden Teilen besteht:

– zwei Teilstrecken, und zwar einer einlaufseitigen Strecke (18) am Ausgang der genannten ersten Maschine (10), gefolgt von einer abgabeseitigen Strecke am Eingang der zweiten Maschine (12),
– einem Antriebssystem (36, 38) der genannten einlaufseitigen Strecke (18) mit zwei wahlweise einstellbaren Geschwindigkeiten, einer hohen Geschwindigkeit (V1) und einer niedrigen Geschwindigkeit (V2), wobei die letztgenannte Geschwindigkeit ein Aneinanderstoßen der transportierten Produkte (16) ohne Gefahr einer Beschädigung zuläßt,
– einem zweiten, in der abgabeseitigen Strecke (20) plazierten Fühler (C2) zur Erfassung der Produktanhäufung, der zur Ansteuerung des genannten Antriebssystems dient und dieses veranlaßt, die einlaufseitige Strecke (18) auf niedrige Geschwindigkeit (V2) umzuschalten, wenn die Produktanhäufung sich bis zum genannten zweiten Fühler erstreckt.

2. Fertigungslinie nach Anspruch 1, dadurch gekennzeichnet, daß die Fördergeschwindigkeit der abgabeseitigen Strecke (20) annähernd mit der genannten niedrigen Geschwindigkeit (V2) übereinstimmt.

3. Fertigungslinie nach Anspruch 1 oder 2, dadurch gekennzeichnet, daß der genannte zweite Fühler (C2) die Umschaltung auf hohe Geschwindigkeit (V1) veranlaßt, wenn durch ihn keine Anhäufung von Produkten (16) erfaßt wird.

4. Fertigungslinie nach Anspruch 1 oder 2, dadurch gekennzeichnet, daß bei Anordnung des zweiten Fühlers im Eingangsbereich der abgabeseitigen Strecke (20) ein dritter Fühler (C3) zur Erfassung der Produktanhäufung im Ausgangsbereich der abgabeseitigen Strecke (20) plaziert ist, der das genannte Antriebssystem ansteuert und dieses veranlaßt, von niedriger Geschwindigkeit (V2) auf hohe Geschwindigekeit (V1) umzuschalten, wenn die Produktanhäufung sich nicht bis auf Höhe des genannten dritten Fühlers erstreckt.

5. Fertigungslinie nach einem der vorhergehenden Ansprüche, dadurch gekennzeichnet, daß die einlaufseitige Strecke (18) deutlich länger ist als die abgabeseitige Strecke (20).

6. Fertigungslinie nach einem der vorhergehenden Ansprüche, dadurch gekennzeichnet, daß diese über eine Vorrichtung verfügt, die die Abschaltung der abgabeseitigen Strecke (20) bewirkt, wenn der zweite Fühler (C2) eine Produktanhäufung bei gleichzeitigem Stillstand der zweiten Maschine erfaßt.

7. Fertigungslinie nach einem der vorhergehenden Ansprüche, dadurch gekennzeichnet, daß die einlaufseitige Strecke (18) in mehrere aufeinanderfolgende Teilstrecken untergliedert ist, die unabhängig voneinander mit niedriger oder hoher Laufgeschwindigkeit (V1, V2) arbeiten können und von einem der jeweils folgenden Teilstrecke zugeordneten Fühler gesteuert werden.

8. Fertigungslinie nach einem der vorhergehenden Ansprüche, dadurch gekennzeichnet, daß die genannten Fühler (C1, C2, C3) den Durchgang der Produkte erfassen und mit einem Zeitsteuerkreis gekoppelt sind, um ein phasenrichtiges Signal der Produktanhäufung auszusenden.

9. Fertigungslinie nach einem der vorhergehenden Ansprüche, dadurch gekennzeichnet, daß die Arbeitstakte der beiden genannten Maschinen (10, 12) annähernd gleich sind und daß die genannte niedrige Geschwindigkeit (V2) des Fördermittels einen Zuführtakt gewährleistet, der höher ist als der genannte Arbeitstakt der Maschinen.

10. Fertigungslinie nach einem der vorhergehenden Ansprüche, dadurch gekennzeichnet, daß das Fördermittel die Produkte (16) bzw. die Auflagepaletten der Produkte durch Haftreibung weitertransportiert und gleichzeitig durch Produktanhäufung mit Schlupfwirkung zwischen Fördermittel und Produkt eine Pufferstrecke gebildet werden kann.

11. Fertigungslinie nach einem der vorhergehenden Ansprüche, dadurch gekennzeichnet, daß das Fördermittel (18) zwei schraubenähnliche Förderstrecken aufweist, die durch vertikale Ausgleichsstufen die erforderliche Streckenlänge bei gleichzeitiger Begrenzung der notwendigen Bodenstellfläche gewährleisten.

12. Fertigungslinie nach Anspruch 11, dadurch gekennzeichnet, daß die vertikalen Ausgleichsstufen so konstruiert ist, daß zwischen den beiden Maschinen einen tunnelartiger Durchgang entsteht, der das Passieren von Personen und Produkten erleichtert.

**Claims**

1. A production line made up of machines (10,12) or workstations and conveyors (18,20) each linking two successive machines to transport the parts (16) from the first machine (10) to the second machine (12) allowing an accumulation of parts to constitute a buffer stock to make up for the temporary differences in the production rates of said two machines, a first parts accumulation detector (C1) being disposed at the output from the first machine (10) to shut down the latter and the conveyor in the event of excessive accumulation of parts on the conveyor, characterized in that said conveyor comprises :
    – two sections, an upline section (18) disposed at the output from said first machine (10), followed by a downline section disposed at the input to the second machine (12),
    – a drive means (36,38) for driving said upline section (18) selectively at high speed (V1) and at low speed (V2), the latter being compatible with an impact without risk of damage to the transported parts (16),
    – and a second parts accumulation detector (C2), located on the downline section (20) to control said drive means to run the upline section (18) at low speed (V2) when an accumulation of parts occurs up to the level of said second detector.

2. The production line according to claim 1, characterized in that the driving speed of the downline section (20) is appreciably equal to said low speed (V2).

3. The production line according to claim 1 or 2, characterized in that said second detector (C2) orders driving at high speed (V1) when it doesn't detect an accumulation of parts (16).

4. The production line according to claim 1 or 2, characterized in that a third accumulation detector (C3) is located appreciably at the downline end of the downline section (20), the second detector (C2) being appreciably at the upline end of the downline section (20) and that said third detector (C3) controls said drive means (36,38) to switch from low speed (V2) to high speed (V1) when the accumulation of parts doesn't reach the level of said third detector.

5. The production line according to one of the above claims, characterized in that the length of the upline section (18) is appreciably greater than that of the downline section (20).

6. The production line according to one of the above claims, characterized in that it comprises a device for stopping the downline section (20) when the second detector (C2) detects an accumulation of parts and the second machine is shut down.

7. The production line according to one of the above claims, characterized in that the upline section (18) is itself subdivided into several successive sections, each of them being able to be driven selectively and independently at high speed (V1) and at low speed (V2), being controlled by a detector associated with the following section.

8. The production line according to one of the above claims, characterized in that said detectors (C1, C2, C3) detect the passage of the parts and are associated with a time delay to emit a signal in the accumulation phase of the parts (16).

9. The production line according to one of the above claims, characterized in that the production rates of said two machines (10, 12) are appreciably equal and that said low speed (V2) of the conveyor ensures a feed rate higher than said production rate of the machines.

10. The production line according to one of the above claims, characterized in that the conveyor drives by friction the parts (16) or the parts support palettes allowing a buffer stock to form by accumulation of parts with sliding between the conveyor and the parts.

11. The production line according to one of the above claims, characterized in that the conveyor (18) comprises two pseudo-helical structures enabling the necessary developed length to be obtained by vertical staggering while limiting the ground surface required.

12. The production line according to claim 11, characterized in that the vertical staggering is used to arrange a bridge passage between the two machines for ease of circulation of personnel and products.

Fig 1

Fig 2

# Fig 3

Fig 4 –

Fig 5 –

Fig 6 –

Fig 7 –